(19) **Europäisches Patentamt / European Patent Office / Office européen des brevets**

(11) **EP 4 553 702 A1**

(12) **EUROPEAN PATENT APPLICATION**
published in accordance with Art. 153(4) EPC

(43) Date of publication:
14.05.2025  Bulletin 2025/20

(21) Application number: 23859216.6

(22) Date of filing: 23.08.2023

(51) International Patent Classification (IPC):
$G06N\ 3/0495^{(2023.01)}$  $G06N\ 3/086^{(2023.01)}$

(52) Cooperative Patent Classification (CPC):
G06N 3/045; G06N 3/0495; G06N 3/082;
G06N 3/086

(86) International application number:
PCT/CN2023/114431

(87) International publication number:
WO 2024/046183 (07.03.2024 Gazette 2024/10)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 30.08.2022  CN 202211051840

(71) Applicant: Huawei Technologies Co., Ltd.
Shenzhen, Guangdong 518129 (CN)

(72) Inventors:
• LIN, Jing
  Shenzhen, Guangdong 518129 (CN)
• YAO, Yiwu
  Shenzhen, Guangdong 518129 (CN)
• YUAN, Xihao
  Shenzhen, Guangdong 518129 (CN)
• ZHANG, Mengyang
  Shenzhen, Guangdong 518129 (CN)

(74) Representative: MERH-IP Matias Erny Reichl
Hoffmann
Patentanwälte PartG mbB
Paul-Heyse-Straße 29
80336 München (DE)

(54) **MODEL COMPRESSION METHOD AND APPARATUS, AND RELATED DEVICE**

(57)    This application provides a model compression method and apparatus, and a related device. The method includes: obtaining a first weight of each layer of a neural network model, where the first weight of each layer is a value of a floating-point type; and quantizing the first weight of each layer based on a quantization parameter to obtain a second weight of each layer. The second weight of each layer is a multi-bit integer. Quantities of bits of second weights of at least a part of layers are different. A quantity of quantization bits of a second weight of a layer with high sensitivity to a quantization error is greater than a quantity of quantization bits of a second weight of a layer with low sensitivity to the quantization error. According to the method, a precision loss of a model can be effectively reduced.

FIG. 1

S110: Generate quantization bits of a neural network model
→
S120: Quantize a first weight of each layer to obtain a second weight of each layer
→
S130: Whether a precision requirement is met
→ No →
S140: Optimize the second weight of each layer
→
S150: Generate a neural network model
(Yes)

## Description

This application claims priority to Chinese Patent Application No. 202211051840.1, filed with the China National Intellectual Property Administration on August 30, 2022 and entitled "MODEL COMPRESSION METHOD AND APPARATUS, AND RELATED DEVICE", which is incorporated herein by reference in its entirety.

## TECHNICAL FIELD

This application relates to the field of artificial intelligence, and in particular, to a model compression method and apparatus, and a related device.

## BACKGROUND

With the development of deep learning, neural networks are widely used in fields such as computer vision, natural language processing, and speech recognition. While precision of a neural network model is continuously improved, a structure of the neural network model tends to be complex, and a quantity of parameters is increasing. As a result, it is difficult to deploy the neural network model on a terminal or an edge device with limited resources. In the conventional technology, a floating-point number in a neural network model is converted into a fixed-point number (usually an integer), so that a parameter size and memory consumption of the neural network model are effectively reduced. However, quantization usually causes deterioration of precision of the neural network model, and especially in a low-bit quantization scenario with a high compression ratio, a precision loss is greater.

## SUMMARY

Embodiments of this application provide a model compression method and apparatus, and a related device, to effectively reduce a precision loss.

According to a first aspect, a model compression method is provided, including:

obtaining a first weight of each layer of a neural network model, and quantizing the first weight of each layer based on a quantization parameter to obtain a second weight of each layer, where the first weight of each layer is a value of a floating-point type, the second weight of each layer is a multi-bit integer, quantities of bits of second weights of at least a part of layers are different, and a quantity of quantization bits of a second weight of a layer with high sensitivity to a quantization error is greater than a quantity of quantization bits of a second weight of a layer with low sensitivity to the quantization error.

In the foregoing solution, the first weight of the floating-point type in the neural network model is converted into the second weight that is an integer, and the quantity of quantization bits of the second weight of the layer with high sensitivity to the quantization error is greater than the quantity of quantization bits of the second weight of the layer with low sensitivity to the quantization error. Therefore, a precision loss is effectively reduced while the model is compressed.

In a possible design, quantization bits of the neural network model are generated. The first weight of each layer is quantized based on the quantization bits of the neural network and the quantization parameter to obtain the second weight of each layer. The quantization bits of the neural network include a quantity of quantization bits of each layer of the neural network.

In a possible design, when a neural network model using the second weight does not meet a precision requirement, the second weight is optimized to obtain a third weight. The third weight is a multi-bit integer.

In the foregoing solution, the second weight may be further quantized to obtain the third weight with better effects.

In a possible design, a first quantization bit set is randomly generated. Iterative variation is performed on quantization bit sequences in the first quantization bit set for a plurality of times. A target quantization bit sequence is selected from quantization bit sequences obtained through variation, to obtain a second quantization bit set. A quantization bit sequence is selected from the second quantization bit set as the quantization bits of the neural network. The first quantization bit set includes quantization bit sequences with a quantity a. Each quantization bit sequence in the first quantization bit set includes a quantity of bits of each layer of the neural network model.

In the foregoing solution, iterative variation may be performed for the plurality of times to select a quantization bit sequence with highest fitness and eliminate a quantization bit sequence with poor fitness layer by layer, so that a finally selected quantization bit sequence reduces the precision loss while ensuring compressed bits.

In a possible design, a third quantization bit set is obtained through variation based on the first quantization bit set. A fourth quantization bit set is randomly generated. The third quantization bit set and the fourth quantization bit set are merged to obtain a fifth quantization bit set. The first weight of each layer of the neural network model is quantized based on a quantity of bits of each layer in each quantization bit sequence in the fifth quantization bit set. Fitness of a neural network obtained after quantization is performed through each quantization bit sequence in the fifth quantization bit set is determined. k quantization bit sequences with highest fitness are selected as a new first quantization bit set. The foregoing steps are repeated for a plurality of times until a quantity of repetition times reaches a threshold. A final first quantization bit set is determined as the second quantization bit set. The third quantization bit set includes b quantization bit sequences. The fourth quantization bit set includes c quantization bit sequences, where c is equal to a minus b. The fifth quantization bit set includes quantization bit sequences with a quantity a.

In a possible design, that the second weight is optimized includes: optimizing the quantization parameter; or optimizing a student model through a teacher model, to optimize the second weight. The quantization parameter includes at least one of a scaling factor, a quantization offset, and a rounding manner. The teacher model is a neural network model using the first weight. The student model is a neural network model using the second weight.

In the foregoing solution, the second weight is further optimized, so that the precision loss of the neural network model can be further reduced.

In a possible design, the second weight of each layer or the third weight of each layer is combined to obtain a combined weight of each layer. A quantity of bits of the combined weight is the same as a quantity of bits supported by a processor using the neural network model. The combined weight of each layer is split to obtain the second weight of each layer or the third weight of each layer of the neural network model.

In the foregoing solution, a plurality of second weights or third weights may be combined and then stored, so that storage space for the neural network model is further compressed. In addition, adaptation to various processors may be performed. For example, it is assumed that the second weight is 4-bit. In this case, if the quantity of bits supported by the processor is 8 bits, two second weights may be combined together to form 8 bits; or if the quantity of bits supported by the processor is 16 bits, four second weights may be combined together to form 16 bits. In this way, a plurality of processors supporting different quantities of bits can be supported.

In a possible design, dequantization calculation is performed on the second weight of each layer or the third weight of each layer to obtain a restored first weight of each layer.

In the foregoing solution, when the neural network model needs to be used for calculation, the first weight may be restored through dequantization calculation, to obtain a high-precision neural network model.

According to a second aspect, a model compression apparatus is provided, including:

an obtaining module, configured to obtain a first weight of each layer of a neural network model, where the first weight of each layer is a value of a floating-point type; and
a quantization module, configured to quantize the first weight of each layer based on a quantization parameter to obtain a second weight of each layer, where the second weight of each layer is a multi-bit integer, quantities of bits of second weights of at least a part of layers are different, and a quantity of quantization bits of a second weight of a layer with high sensitivity to a quantization error is greater than a quantity of quantization bits of a second weight of a layer with low sensitivity to the quantization error.

In a possible design, the apparatus further includes an optimization module. The optimization module is configured to: when a neural network model using the second weight does not meet a precision requirement, optimize the second weight to obtain a third weight. The third weight is a multi-bit integer.

In a possible design, the apparatus further includes a generation module. The generation module is configured to generate quantization bits of the neural network model. The quantization module is configured to quantize the first weight of each layer based on the quantization bits of the neural network and the quantization parameter to obtain the second weight of each layer. The quantization bits of the neural network include a quantity of quantization bits of each layer of the neural network.

In a possible design, the generation module is configured to: randomly generate a first quantization bit set, where the first quantization bit set includes quantization bit sequences with a quantity a, and each quantization bit sequence in the first quantization bit set includes a quantity of bits of each layer of the neural network model; perform iterative variation on the quantization bit sequences in the first quantization bit set for a plurality of times, and select a target quantization bit sequence from quantization bit sequences obtained through variation, to obtain a second quantization bit set; and select a quantization bit sequence from the second quantization bit set as the quantization bits of the neural network.

In a possible design, the generation module is configured to: obtain a third quantization bit set through variation based on the first quantization bit set, where the third quantization bit set includes b quantization bit sequences; randomly generate a fourth quantization bit set, where the fourth quantization bit set includes c quantization bit sequences, and c is equal to a minus b; merge the third quantization bit set and the fourth quantization bit set to obtain a fifth quantization bit set, where the fifth quantization bit set includes quantization bit sequences with a quantity a; and quantize the first weight of each layer of the neural network model based on a quantity of bits of each layer in each quantization bit sequence in the fifth quantization bit set, determine fitness of a neural network obtained after quantization is performed through each quantization bit sequence in the fifth quantization bit set, select k quantization bit sequences with highest fitness as a new first quantization bit set, repeat the foregoing steps for a plurality of times until a quantity of repetition times reaches a threshold, and determine a final first quantization bit set as the second quantization bit set.

In a possible design, the optimization module is configured to optimize the quantization parameter. The quantization parameter includes at least one of a scaling factor, a quantization offset, and a rounding manner.

In a possible design, the optimization module is configured to optimize a student model through a teacher model, to optimize the second weight. The teacher model is a neural network model using the first weight. The student model is a neural network model using the second weight.

In a possible design, the apparatus further includes a combination module and a splitting module. The combination module is configured to combine the second weight of each layer or the third weight of each layer to obtain a combined weight of each layer. A quantity of bits of the combined weight is the same as a quantity of bits supported by a processor using the neural network model. The splitting module is configured to split the combined weight of each layer to obtain the second weight of each layer or the third weight of each layer of the neural network model.

In a possible design, the apparatus further includes a restoration module. The restoration module is configured to perform dequantization calculation on the second weight of each layer or the third weight of each layer to obtain a restored first weight of each layer.

According to a third aspect, an embodiment of the present invention provides a computing device. The computing device includes a processor, a memory, a communication interface, and a bus. The processor, the memory, and the communication interface may be connected to each other through an internal bus, or may communicate with each other in another manner, for example, wireless transmission. The memory may store computer instructions. The processor is configured to perform any possible implementation of the first aspect to implement functions of modules. The communication interface is configured to receive an input related signal.

According to a fourth aspect, an embodiment of the present invention provides a computing device cluster. The computing device cluster may be used in the system provided in the first aspect. The computing device cluster includes at least one computing device.

In specific implementation, the computing device may be a server, for example, a central server, an edge server, or a local server in a local data center. Alternatively, the computing device may be a terminal device, for example, a desktop computer, a notebook computer, or a smartphone.

In a possible implementation of the fourth aspect, memories of one or more computing devices in the computing device cluster may also separately store some instructions used to perform the multi-selection method. In other words, the one or more computing devices may be combined to jointly execute instructions used to perform the model compression method provided in the first aspect.

Memories of different computing devices in the computing device cluster may store different instructions to separately perform some functions of the model compression apparatus provided in the second aspect. In other words, the instructions stored in the memories of the different computing devices may implement functions of one or more modules in the obtaining module and the quantization module.

In a possible implementation of the fourth aspect, one or more computing devices in the computing device cluster may be connected through a network. The network may be a wide area network, a local area network, or the like.

According to a fifth aspect, an embodiment of the present invention provides a computer-readable storage medium. The computer-readable storage medium stores instructions. The instructions run on a computing device, so that the computing device performs the method in the foregoing aspects.

In this application, based on the implementations according to the foregoing aspects, the implementations may be further combined to provide more implementations.

## BRIEF DESCRIPTION OF DRAWINGS

To describe the technical solutions in embodiments of the present invention more clearly, the following briefly describes the accompanying drawings required for describing embodiments.

FIG. 1 is a schematic flowchart of a model compression method according to this application;
FIG. 2 is a schematic flowchart of generating quantization bits of a neural network model according to this application;
FIG. 3 is a schematic flowchart of performing iterative variation on a first quantization bit set for a plurality of times according to this application;
FIG. 4 is a schematic diagram of a structure of a model compression apparatus according to this application;
FIG. 5 is a schematic diagram of a structure of a computing device according to this application;
FIG. 6 is a schematic diagram of a structure of a computing device cluster according to this application; and
FIG. 7 is a schematic diagram of a structure of another computing device cluster according to this application.

## DESCRIPTION OF EMBODIMENTS

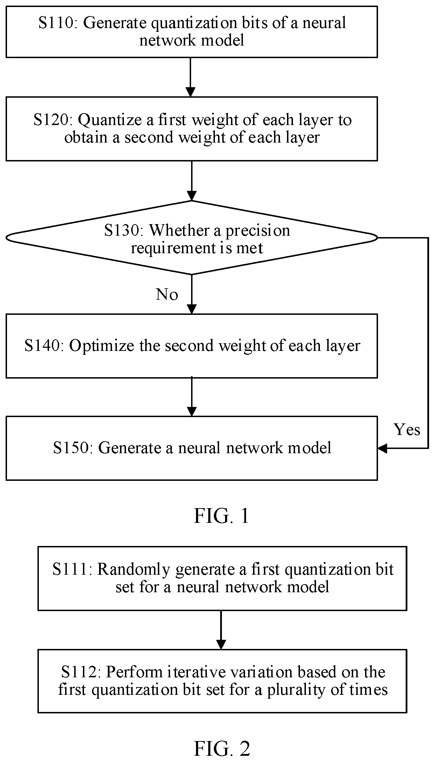

FIG. 1 is a schematic flowchart of a model compression method according to this application. As shown in FIG. 1, the model compression method in this application includes the following steps.

S110: A computing device generates quantization bits of a neural network model.

In some possible embodiments, the neural network model may be a deep neural network model, a convolutional neural network model, a recurrent neural network model, a variant of these neural network models, a combination of these neural networks, or the like. This is not specifically limited herein. The neural network model may include a plurality of layers. Each layer includes a plurality of first weights. The first weights are of a floating-point type. The first weight of each layer of the neural network model is obtained through training with a large amount of known data and labels corresponding to the known data.

In some possible embodiments, the quantization bits of the neural network model include a quantity of quantization bits of each layer of the neural network. Herein, values of the quantization bits of the neural network model may be mixed. In other words, the quantities of quantization bits of the layers of the neural network model may be different. Because different layers of the neural network model have different sensitivity to a quantization error caused by quantization, a quantity of quantization bits of a weight of a layer with high sensitivity to the quantization error is large, and a quantity of quantization bits of a weight of a layer with low sensitivity to the quantization error is small. Therefore, a precision loss of the neural network model caused by quantization can be minimized while a compression ratio is ensured. For example, if a quantity of layers of the neural network is 5, and the quantization bits of the neural network model are {2, 4, 8, 2, 2}, it indicates that a weight of a first layer of the neural network is quantized into a 2-bit integer, a weight of a second layer of the neural network is quantized into a 4-bit integer, a weight of a third layer of the neural network is quantized into an 8-bit integer, a weight of a fourth layer of the neural network is quantized into a 2-bit integer, and a weight of a fifth layer of the neural network is quantized into a 2-bit integer. In the foregoing example, an example in which the quantity of layers of the neural network is 5 and the quantization bits of the neural network model are {2, 4, 8, 2, 2} is used for description. In actual application, both the quantity of layers of the neural network and the values of the quantization bits may be other values. This is not specifically limited herein.

In some possible embodiments, as shown in FIG. 2, a process in which the computing device generates the quantization bits of the neural network model may include the following steps.

S111: The computing device randomly generates a first quantization bit set for the neural network model.

In some more specific embodiments, the first quantization bit set includes quantization bit sequences with a quantity a. Each quantization bit sequence in the first quantization bit set includes a quantity of bits of each layer of the neural network model. The following provides description with reference to a specific embodiment. If the neural network model includes r layers, and the first quantization bit set includes a total of quantization bit sequences with a quantity a $\{X_1, X_2, ..., X_a\}$, where $X_i$ includes $\{K_1, K_2, ..., K_r\}$, it indicates that a weight of a first layer of the neural network is quantized into a $K_i$-bit integer, a weight of a second layer of the neural network is quantized into a $K_2$-bit integer, ..., and a weight of an $r^{th}$ layer of the neural network is quantized into a $K_r$-bit integer. It should be understood that the quantization bit sequences in the first quantization bit set are all randomly generated, and they may be different from each other, but all need to ensure that the compression ratio can meet a requirement.

S112: The computing device performs iterative variation based on the quantization bit sequences in the first quantization bit set for a plurality of times, and selects a target quantization bit sequence with high fitness from quantization bit sequences obtained through variation, to obtain a second quantization bit set.

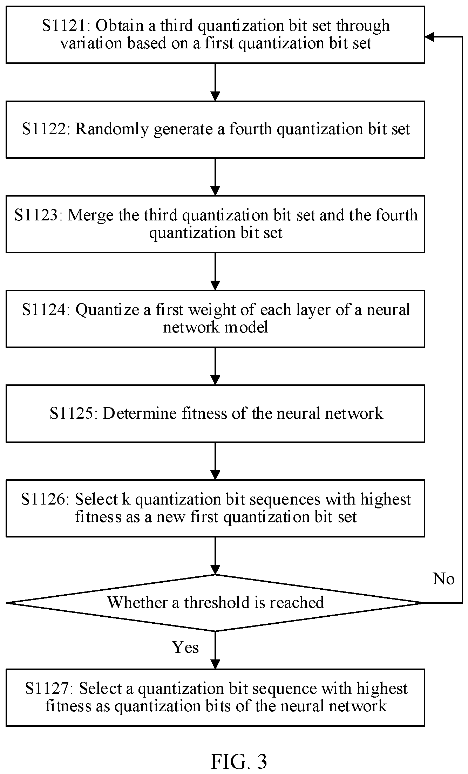

In some more specific embodiments, the computing device performs iterative variation on the quantization bit sequences in the first quantization bit set for the plurality of times, and selects the target quantization bit sequence with high fitness from the quantization bit sequences obtained through variation, to obtain the second quantization bit set. It may be understood that selection of a quantization bit sequence with highest fitness is merely used as a specific example. In actual application, a quantization bit sequence with second highest fitness, or the like may also be selected. This is not specifically limited herein. As shown in FIG. 3, the method includes the following steps.

S1121: The computing device obtains a third quantization bit set through variation based on the first quantization bit set.

In some more specific embodiments, the third quantization bit set may include b quantization bit sequences. Each of the b quantization bit sequences includes a quantity of bits of each layer of the neural network model. The third quantization bit set may include a smaller quantity of quantization bit sequences than those in the first quantization bit set, or may include a same quantity of quantization bit sequences as those in the first quantization bit set. This is not specifically limited herein.

In some more specific embodiments, variation may lead to two results. One is to obtain a quantization bit sequence with higher fitness (for example, with a high compression ratio but with a low precision loss), and the other is to obtain a quantization bit sequence with lower fitness (for example, with a low compression ratio but with a high precision loss). The quantization bit sequence with higher fitness is reserved. The quantization bit sequence with lower fitness is eliminated. After a plurality of iterations, a generation of quantization bit sequences with higher fitness can be generated.

In some more specific embodiments, the computing device may obtain the third quantization bit set through variation based on the first quantization bit set in at least one of the following two manners.

In a first manner, a quantization bit set Si is obtained through hybridization based on the first quantization bit set. Herein, a hybridization manner includes but is not limited to performing vector addition, vector subtraction, and the like on the quantization bit sequences in the first quantization bit set. In addition, vector addition, vector subtraction, and the like may be performed on two, three, or more quantization bit sequences. The following provides detailed description by using an example in which vector addition is performed on two quantization bit sequences:

$$S_1 = \left[\frac{1}{2}X_1 + \frac{1}{2}X_2, \quad \frac{1}{2}X_2 + \frac{1}{2}X_3, \quad ..., \frac{1}{2}X_{a-1} + \frac{1}{2}X_a\right]$$

$\frac{1}{2}X_1 + \frac{1}{2}X_2$, $\frac{1}{2}X_2 + \frac{1}{2}X_3$, and ..., $\frac{1}{2}X_{a-1} + \frac{1}{2}X_a$ in the quantization bit set $S_1$ may be different from each other, but all need to ensure that the compression ratio can meet the requirement.

In a second manner, the first quantization bit set is changed to a quantization bit set $S_2$. Herein, a quantity of quantization bits of each layer in each quantization bit sequence in the first quantization bit set is changed to another value at a probability P. For example, it is assumed that the quantization bit sequence $X_i$ in the first quantization bit set includes $\{K_1, K_2, ..., K_r\}$, and variation is performed at a probability of $1/r$. In this case, the quantization bit sequence $X_i$ may be changed to a quantization bit sequence $X_i'=\{K_1, K_2, K_3', ..., K_r\}$, where $K_3'$ is obtained through variation of $K_3$.

It may be understood that the quantization bit set $S_1$ and the quantization bit set $S_2$ may be merged to obtain the third quantization bit set. Hybridization and changing may be simultaneously performed on the first quantization bit set to obtain the third quantization bit set. Alternatively, hybridization may be first performed on the first quantization bit set to obtain the quantization bit set $S_1$, and then the quantization bit set $S_1$ is changed to obtain the third quantization bit set; the first quantization bit set may be first changed to obtain the quantization bit set $S_2$, and then hybridization is performed on the quantization bit set $S_2$ to obtain the third quantization bit set; or the like.

S1122: Randomly generate a fourth quantization bit set.

In some more specific embodiments, the fourth quantization bit set may include c quantization bit sequences, and c is equal to a minus b. Each of the c quantization bit sequences includes a quantity of bits of each layer of the neural network model. When variation is performed in step S1121, a quantity of quantization bit sequences obtained through variation is usually less than a quantity of quantization bit sequences in the original first quantization bit set. The fourth quantization bit set needs to be randomly generated for supplement, to ensure that iteration can be performed for a plurality of times.

S1123: Merge the third quantization bit set and the fourth quantization bit set to obtain a fifth quantization bit set, where the fifth quantization bit set includes quantization bit sequences with a quantity a.

S1124: Quantize the first weight of each layer of the neural network model based on a quantity of bits of each layer in each quantization bit sequence in the fifth quantization bit set.

In some more specific embodiments, quantizing the first weight of each layer of the neural network model based on the quantity of bits of each layer in each quantization bit sequence in the fifth quantization bit set includes: grouping the first weights in the neural network model by layer. In other words, all first weights of the first layer of the neural network model may be used as a first group, all first weights of the second layer of the neural network model may be used as a second group, the rest may be deduced by analogy, and all first weights of a last layer of the neural network model may be used as a last group. It may be understood that in the foregoing solution, different layers are used as different groups for processing. In actual application, each layer of the neural network may be further grouped based on a convolution channel. This is not specifically limited herein.

Statistics on data distribution of each group of first weights is collected, including a minimum value min_val and a maximum value max_val of each group of first weights. Then, a scaling factor and a quantization offset are calculated. Finally, each group of weights are quantized based on the scaling factor and the quantization offset. An integer quantization range of n-bit quantization is $[-2^{n-1}, 2^{n-1} - 1]$. Details are as follows.

A process of quantizing all the first weights of the first layer of the neural network model is as follows: Statistics on data distribution of the first weights of the first layer is collected, including a minimum value min_val_1 and a maximum value max_val_1 of the first weights of the first layer. Then, a scaling factor and a quantization offset of the first weight of the first layer are calculated:

$$scale_1 = \frac{\max\_val\_1 - \min\_val\_1}{2^{n_1} - 1}$$

$$\text{offset}_1 = \text{round}\left(\left(-2^{n_1-1}\right) - \frac{min\_val\_1}{scale_1}\right)$$

Herein, $scale_1$ is the scaling factor of the first layer of the neural network model, $offset_1$ is the quantization offset of the first layer of the neural network model, min_val_1 is the minimum value of the first weights of the first layer, max_val_1 is the maximum value of the first weights of the first layer, round() is rounding, and $n_1$ is a quantity of bits used for the first layer of the neural network model, for example, 2 bits or 4 bits.

Finally, all the first weights of the first layer of the neural network model are quantized based on the scaling factor $scale_1$ and the quantization offset $offset_1$.

A process of quantizing all the first weights of the second layer of the neural network model is as follows: Statistics on data distribution of the first weights of the second layer is collected, including a minimum value min_val_2 and a maximum value max_val_2 of the first weights of the second layer. Then, a scaling factor and a quantization offset of the first weight of the second layer are calculated:

$$scale_2 = \frac{max\_val\_2 - min\_val\_2}{2^{n_2} - 1}$$

$$\text{offset}_2 = \text{round}\left(\left(-2^{n_2-1}\right) - \frac{min\_val\_2}{scale_2}\right)$$

Herein, $scale_2$ is the scaling factor of the second layer of the neural network model, $offset_2$ is the quantization offset of the second layer of the neural network model, min_val_2 is the minimum value of the first weights of the second layer, max_val_2 is the maximum value of the first weights of the second layer, round() is rounding, and $n_2$ is a quantity of bits used for the second layer of the neural network model, for example, 2 bits or 4 bits.

Finally, all the first weights of the second layer of the neural network model are quantized based on the scaling factor $scale_2$ and the quantization offset $offset_2$.

The rest may be deduced by analogy.

A process of quantizing all first weights of the $r^{th}$ layer of the neural network model is as follows: Statistics on data distribution of the first weights of the $r^{th}$ layer is collected, including a minimum value min_val_r and a maximum value max_val_r of the first weights of the $r^{th}$ layer. Then, a scaling factor and a quantization offset of the first weight of the $r^{th}$ layer are calculated:

$$scale_r = \frac{max\_val\_r - min\_val\_r}{2^{n_r} - 1}$$

$$\text{offset}_r = \text{round}\left(\left(-2^{n_r-1}\right) - \frac{min\_val\_r}{scale_r}\right)$$

Herein, $scale_r$ is the scaling factor of the $r^{th}$ layer of the neural network model, $offset_r$ is the quantization offset of the $r^{th}$ layer of the neural network model, min_val_r is the minimum value of the first weights of the $r^{th}$ layer, max_val_r is the maximum value of the first weights of the $r^{th}$ layer, round() is rounding, and $n_r$ is a quantity of bits used for the $r^{th}$ layer of the neural network model, for example, 2 bits or 4 bits.

Finally, all the first weights of the $r^{th}$ layer of the neural network model are quantized based on the scaling factor $scale_r$ and the quantization offset $offset_r$.

S1125: Determine fitness of a neural network obtained after quantization is performed through each quantization bit sequence in the fifth quantization bit set.

In some more specific embodiments, the fitness of the neural network may be evaluated through the quantization error (mean square error, MSE) and model prediction precision. It may be understood that each quantization bit sequence in the fifth quantization bit set corresponds to one piece of fitness of the neural network. For example, if the fifth quantization bit set includes $\{Y_1, Y_2, ..., Y_a\}$, the quantization bit sequence $Y_1$ corresponds to fitness $Z_1$ of the neural network, the quantization bit sequence $Y_2$ corresponds to fitness $Z_2$ of the neural network, ..., and the quantization bit sequence $Y_2$ corresponds to fitness $Z_a$ of the neural network.

S1126: Select k quantization bit sequences with highest fitness as a new first quantization bit set, repeat steps S1121 to S1126 for a plurality of times until a quantity of repetition times reaches a threshold, and determine a final first quantization bit set as the second quantization bit set.

S1127: Select a quantization bit sequence with highest fitness from the second quantization bit set as the quantization bits of the neural network.

It should be understood that in the foregoing solution, a quantity of quantization bit sequences in the first quantization bit set, a quantity of quantization bit sequences in the third quantization bit set, a quantity of quantization bit sequences in the fourth quantization bit set, a quantity K of quantization bit sequences with highest fitness, the change probability P, a fitness indicator, a quantity of evolution times, and the like may all be set as required.

S120: Quantize the first weight of each layer based on a quantization parameter to obtain a second weight of each layer, where the quantization parameter may include a scaling factor, a quantization offset, a rounding manner, and the like, a quantization manner in this step is similar to that in step S1124, and details are not described herein again.

S130: Determine whether a neural network model using the second weight meets a precision requirement, and if the precision requirement is not met, perform step S140; or if the precision requirement is met, perform step S150.

S140: Optimize the second weight.

In some more specific embodiments, optimizing the quantization parameter may include optimizing at least one of the scaling factor, the quantization offset, and the rounding manner.

The scaling factor and the quantization offset may be optimized in the following manner:

$$\underset{scale,\ offset}{\arg\min} L\left( W,\ \text{round}\left( \frac{W}{scale} \right) + \text{offset} \right)$$

Herein, L() represents a quantization error calculation function (for example, a mean square error before and after weight quantization), W is a model weight, scale is the scaling factor, offset is the quantization offset, and round() is the rounding manner.

The rounding manner may be optimized in the following manner:

$$\underset{\Delta}{\arg\min} L\left( W,\ \text{round}\left( \frac{W}{scale} + \Delta \right) + \text{offset} \right)$$

Herein, L() represents the quantization error calculation function (for example, the mean square error before and after weight quantization), W is the model weight, scale is the scaling factor, offset is the quantization offset, round() is the rounding manner, and $\Delta$ represents a disturbance tensor that needs to be introduced (a shape is the same as that of W). A rounding direction of $\frac{W}{scale}$ is changed. When the rounding manner round() is optimized, scale and offset are fixed.

In some more specific embodiments, the second weight may be optimized as follows: performing knowledge migration on a student model through a teacher model, to optimize the second weight. The teacher model may be a neural network model obtained through training with a large amount of known data and known labels, and a first weight of each layer of the teacher model is a floating-point number. The student model may be a neural network model obtained by quantizing the teacher model through step S110 to step S140, and a second weight of each layer of the student model is an integer. Network structures of the teacher model and the student model may be the same. For example, a quantity of layers of the teacher model, a quantity of nodes at each layer, and the like are all the same as those of the student model. The performing knowledge migration on a student model through a teacher model may be: inputting a plurality of pieces of unlabeled data into the teacher model for prediction, to obtain predicted labels of the plurality of pieces of unlabeled data, and then using the plurality of pieces of unlabeled data and the predicted labels corresponding to the plurality of pieces of unlabeled data as input of the student model, to repeatedly train the student model for a plurality of times to further change the second weight in the student model; or inputting a plurality of pieces of unlabeled data into the teacher model for prediction, to obtain an intermediate feature of the teacher model, and then causing the student model to learn the intermediate feature of the teacher model to further change the second weight in the student model. It should be understood that in addition to training the student model with the unlabeled data, the student model may be trained with reference to some labeled data. This is not specifically limited herein.

S150: Generate a quantized neural network model.

The second weight of each layer or the third weight of each layer may be combined, to reduce a requirement for storage space and adapt to processors supporting different quantities of bits. For example, it is assumed that a second weight of the first layer is 4-bit, and a second weight of the second layer is 2-bit. In this case, if a quantity of bits supported by the processor is 8 bits, two second weights of the first layer may be combined together to form an 8-bit combined weight, and four second weights of the second layer may be combined together to form an 8-bit combined weight; or if a quantity of bits supported by the processor is 16 bits, four second weights of the first layer may be combined together to form a 16-bit combined weight, and eight second weights of the second layer may be combined together to form a 16-bit combined weight. In this way, the requirement for the storage space is effectively reduced, and a plurality of processors supporting different quantities of bits can be supported. When the neural network model needs to be used, a combined weight of each layer is split to obtain the second weight of each layer or the third weight of each layer of the neural network model. For example, it is assumed that the combined weight is 01101011, which is obtained by combining four 2-bit second weights or third weights. In this case, the combined weight may be split into the four 2-bit second weights or third weights, that is, 01, 10, 10, and 11.

To improve calculation precision of the neural network model, dequantization calculation may be performed on the second weight or the third weight of each layer, to obtain a restored first weight. In a specific implementation, dequantization calculation may be performed in the following manner:

$$X = scale * (Y - offset)$$

$Y$ is the second weight or the third weight. *scale* is the scaling factor. *offset* is the quantization offset. $X$ is the restored first weight. Dequantization calculation is performed on the second weight or the third weight of each layer to obtain the restored first weight, and the restored weight is a value of the floating-point type. Therefore, input data of a neural network model generated with the restored first weight does not need to be converted into an integer for calculation, and a quantization error caused by quantization of the input data is also effectively avoided because the more quantization times, the more quantization errors are caused.

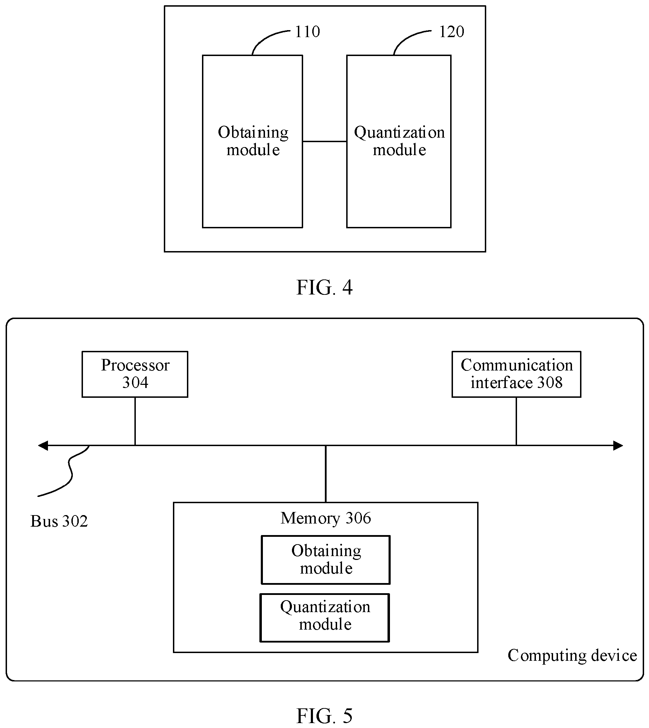

FIG. 4 is a schematic diagram of a structure of a model compression apparatus according to this application. As shown in FIG. 4, the model compression apparatus in this application includes:

an obtaining module 110, configured to obtain a first weight of each layer of a neural network model, where the first weight of each layer is a value of a floating-point type; and
a quantization module 120, configured to quantize the first weight of each layer based on a quantization parameter to obtain a second weight of each layer, where the second weight of each layer is a multi-bit integer, quantities of bits of second weights of at least a part of layers are different, and a quantity of quantization bits of a second weight of a layer with high sensitivity to a quantization error is greater than a quantity of quantization bits of a second weight of a layer with low sensitivity to the quantization error.

The obtaining module 110 is configured to perform step S110 in the model compression method shown in FIG. 1. The quantization module 120 is configured to perform step S120 in the model compression method shown in FIG. 1.

This application further provides a computing device. As shown in FIG. 5, the computing device includes a bus 302, a processor 304, a memory 306, and a communication interface 308. The processor 304, the memory 306, and the communication interface 308 communicate with each other through the bus 302. The computing device may be a server or a terminal device. It should be understood that quantities of processors and memories of the computing device are not limited in this application.

The bus 302 may be a peripheral component interconnect (peripheral component interconnect, PCI) bus, an extended industry standard architecture (extended industry standard architecture, EISA) bus, or the like. The bus may be classified as an address bus, a data bus, a control bus, or the like. For ease of representation, only one line is used for representation in FIG. 5, but it does not mean that there is only one bus or only one type of bus. The bus 302 may include a path for transmitting information between components (for example, the memory 306, the processor 304, and the communication interface 308) of the computing device.

The processor 304 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 306 may include a volatile memory (volatile memory), for example, a random access memory (random access memory, RAM). The processor 304 may further include a non-volatile memory (non-volatile memory), for example, a read-only memory (read-only memory, ROM), a flash memory, a hard disk drive (hard disk drive, HDD), or a solid state drive (solid state drive, SSD).

The memory 306 stores executable program code. The processor 304 executes the executable program code to separately implement functions of the obtaining module 110 and the quantization module 120, to implement step S110 to step S150 in the model compression method shown in FIG. 1. In other words, the memory 306 stores instructions used to perform step S110 to step S150 in the model compression method shown in FIG. 1, or stores instructions used to perform step S110 to step S150 in the model compression method shown in FIG. 1.

Alternatively, the memory 306 stores executable code. The processor 304 executes the executable code to separately implement functions of the foregoing model compression apparatus, to implement step S110 to step S150 in the model compression method shown in FIG. 1. In other words, the memory 306 stores instructions used to perform step S110 to step S150 in the model compression method shown in FIG. 1.

The communication interface 308 uses a transceiver module, for example, but not limited to, a network interface card or a transceiver, to implement communication between the computing device and another device or a communication network.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

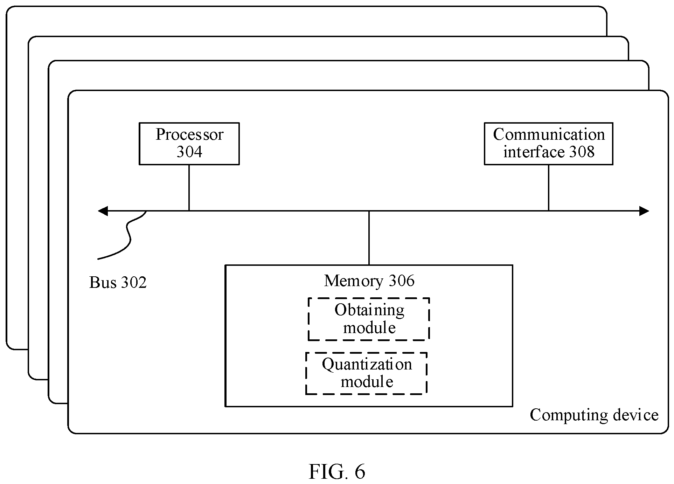

As shown in FIG. 6, the computing device cluster includes the at least one computing device. Memories 306 of one or more computing devices in the computing device cluster may store same instructions used to perform step S110 to step S150 in the model compression method.

In some possible implementations, the memories 306 of the one or more computing devices in the computing device cluster may separately store some instructions used to perform step S110 to step S150 in the model compression method shown in FIG. 1. In other words, the one or more computing devices may be combined to jointly execute the instructions for the aspects of step S110 to step S150 in the model compression method shown in FIG. 1.

It should be noted that memories 306 of different computing devices in the computing device cluster may store different instructions to separately perform some functions of the model compression apparatus. In other words, instructions stored in the memories 306 of the different computing devices may implement functions of one or more modules in the obtaining module and the quantization module.

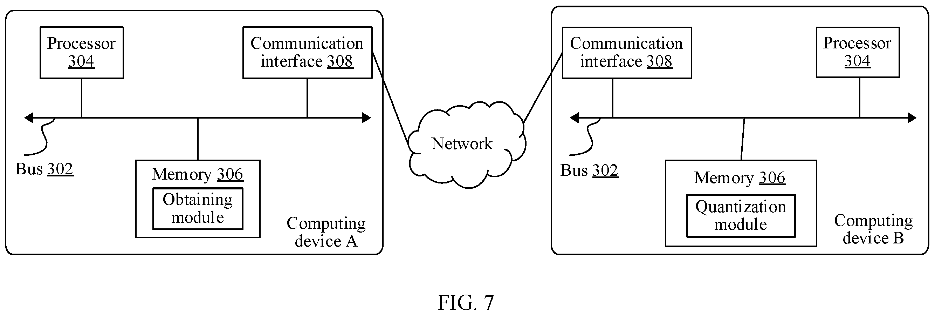

In some possible implementations, the one or more computing devices in the computing device cluster may be connected through a network. The network may be a wide area network, a local area network, or the like. FIG. 7 shows a possible implementation. As shown in FIG. 7, two computing devices A and B are connected through the network. Specifically, each computing device is connected to the network through a communication interface of the computing device. In this possible implementation, a memory 306 of the computing device A stores an instruction for performing a function of the obtaining module. In addition, a memory 306 of the computing device B stores an instruction for performing a function of the quantization module.

A connection manner of the computing device cluster shown in FIG. 7 may be that in consideration of a requirement of the model compression method provided in this application for storage of a large amount of data and calculation on a large amount of data, the quantization module is considered to be executed by the computing device B.

It should be understood that functions of the computing device A shown in FIG. 7 may also be completed by a plurality of computing devices. Similarly, functions of the computing device B may also be completed by a plurality of computing devices.

An embodiment of this application further provides another computing device cluster. For a connection relationship between computing devices in the computing device cluster, reference may be made to the connection manners of the computing device cluster in FIG. 6 and FIG. 7. A difference is that memories 306 of one or more computing devices in the computing device cluster may store same instructions used to perform step S110 to step S150 in the model compression method.

In some possible implementations, the memories 306 of the one or more computing devices in the computing device cluster may separately store some instructions used to perform step S110 to step S150 in the model compression method. In other words, the one or more computing devices may be combined to jointly execute the instructions used to perform step S110 to step S150 in the model compression method.

It should be noted that memories 306 of different computing devices in the computing device cluster may store different instructions to perform some functions of the cloud system. In other words, instructions stored in the memories 306 of the different computing devices may implement functions of one or more apparatuses of the model compression apparatus.

An embodiment of this application further provides a computer program product including instructions. The computer program product may be software or a program product that includes instructions and that can run on a computing device or be stored in any usable medium. When the computer program product runs on at least one computing device, the at least one computing device is caused to perform a model compression method.

An embodiment of this application further provides a computer-readable storage medium. The computer-readable storage medium may be any usable medium that can be stored in a computing device, or a data storage device, for example, a data center, including one or more usable media. The usable medium may be a magnetic medium (for example, a floppy disk, a hard disk drive, or a magnetic tape), an optical medium (for example, a DVD), a semiconductor medium (for example, a solid state drive), or the like. The computer-readable storage medium includes instructions. The instructions instruct the computing device to perform a model compression method.

When the computer program instructions are loaded and executed on a computer, all or some of the procedures or functions according to embodiments of the present invention are generated. The computer may be a general-purpose computer, a dedicated computer, a computer network, or another programmable apparatus.

The computer instructions may be stored in the computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage node, for example, a server or a data center, including at least one usable medium set. The usable medium may be a magnetic medium (for example, a floppy disk, a hard disk drive, or a magnetic tape), an optical medium (for example, a high-density digital video disc (digital video disc, DVD)), or a semiconductor medium.

The foregoing descriptions are merely specific embodiments of the present invention, but are not intended to limit the protection scope of the present invention. Any modification or replacement readily figured out by a person skilled in the art within the technical scope disclosed in the present invention shall fall within the protection scope of the present invention. Therefore, the protection scope of the present invention shall be subject to the protection scope of the claims.

## Claims

1. A model compression method, comprising:

   obtaining a first weight of each layer of a neural network model, wherein the first weight of each layer is a value of a floating-point type; and
   quantizing the first weight of each layer based on a quantization parameter to obtain a second weight of each layer, wherein the second weight of each layer is a multi-bit integer, quantities of bits of second weights of at least a part of layers are different, and a quantity of quantization bits of a second weight of a layer with high sensitivity to a quantization error is greater than a quantity of quantization bits of a second weight of a layer with low sensitivity to the quantization error.

2. The method according to claim 1, wherein after the first weight of each layer is quantized based on quantization bits of the neural network and the quantization parameter to obtain the second weight of each layer, the method further comprises:
   when a neural network model using the second weight does not meet a precision requirement, optimizing the second weight to obtain a third weight, wherein the third weight is a multi-bit integer.

3. The method according to claim 1 or 2, wherein before the quantizing the first weight of each layer to obtain a second weight of each layer, the method further comprises:

   generating the quantization bits of the neural network model, wherein the quantization bits of the neural network comprise a quantity of quantization bits of each layer of the neural network; and
   the quantizing the first weight of each layer based on a quantization parameter to obtain a second weight of each layer further comprises:
   quantizing the first weight of each layer based on the quantization bits of the neural network and the quantization parameter to obtain the second weight of each layer.

4. The method according to claim 3, wherein the generating the quantization bits of the neural network model comprises:

   randomly generating a first quantization bit set, wherein the first quantization bit set comprises quantization bit sequences with a quantity a, and each quantization bit sequence in the first quantization bit set comprises a quantity of bits of each layer of the neural network model;
   performing iterative variation on the quantization bit sequences in the first quantization bit set for a plurality of times, and selecting a target quantization bit sequence from quantization bit sequences obtained through variation, to obtain a second quantization bit set; and
   selecting a quantization bit sequence from the second quantization bit set as the quantization bits of the neural network.

5. The method according to claim 4, wherein the performing iterative variation on the quantization bit sequences in the first quantization bit set for a plurality of times, and selecting a target quantization bit sequence from quantization bit sequences obtained through variation, to obtain a second quantization bit set comprises:

obtaining a third quantization bit set through variation based on the first quantization bit set, wherein the third quantization bit set comprises b quantization bit sequences;
randomly generating a fourth quantization bit set, wherein the fourth quantization bit set comprises c quantization bit sequences, and c is equal to a minus b;
merging the third quantization bit set and the fourth quantization bit set to obtain a fifth quantization bit set, wherein the fifth quantization bit set comprises quantization bit sequences with a quantity a; and
quantizing the first weight of each layer of the neural network model based on a quantity of bits of each layer in each quantization bit sequence in the fifth quantization bit set, determining fitness of a neural network obtained by performing quantization by using each quantization bit sequence in the fifth quantization bit set, selecting k quantization bit sequences with highest fitness as a new first quantization bit set, repeating the foregoing steps for a plurality of times until a quantity of repetition times reaches a threshold, and determining a final first quantization bit set as the second quantization bit set.

6. The method according to any one of claims 3 to 5, wherein the optimizing the second weight comprises:
optimizing the quantization parameter, wherein the quantization parameter comprises at least one of a scaling factor, a quantization offset, and a rounding manner.

7. The method according to any one of claims 3 to 5, wherein the optimizing the second weight comprises:
optimizing a student model through a teacher model, to optimize the second weight, wherein the teacher model is a neural network model using the first weight, and the student model is a neural network model using the second weight.

8. The method according to any one of claims 2 to 7, wherein the method further comprises:
combining the second weight of each layer or the third weight of each layer to obtain a combined weight of each layer, wherein a quantity of bits of the combined weight is the same as a quantity of bits supported by a processor using the neural network model.

9. The method according to claim 8, wherein the method further comprises:
splitting the combined weight of each layer to obtain the second weight of each layer or the third weight of each layer of the neural network model.

10. The method according to any one of claims 2 to 9, wherein the method further comprises:
performing dequantization calculation on the second weight of each layer or the third weight of each layer to obtain a restored first weight of each layer.

11. A model compression apparatus, comprising:

an obtaining module, configured to obtain a first weight of each layer of a neural network model, wherein the first weight of each layer is a value of a floating-point type; and
a quantization module, configured to quantize the first weight of each layer based on a quantization parameter to obtain a second weight of each layer, wherein the second weight of each layer is a multi-bit integer, quantities of bits of second weights of at least a part of layers are different, and a quantity of quantization bits of a second weight of a layer with high sensitivity to a quantization error is greater than a quantity of quantization bits of a second weight of a layer with low sensitivity to the quantization error.

12. A computing device, wherein the computing device comprises a processor and a memory, the memory stores a computer program, and the processor executes the computer program, so that the computing device performs the method according to any one of claims 1 to 10.

13. A computer-readable storage medium, wherein the computer-readable storage medium stores a program; and when the program runs on a computing device, the computing device performs the method according to any one of claims 1 to 10.

S110: Generate quantization bits of a neural network model

↓

S120: Quantize a first weight of each layer to obtain a second weight of each layer

↓

S130: Whether a precision requirement is met

No ↓

Yes →

S140: Optimize the second weight of each layer

↓

S150: Generate a neural network model

FIG. 1

S111: Randomly generate a first quantization bit set for a neural network model

↓

S112: Perform iterative variation based on the first quantization bit set for a plurality of times

FIG. 2

S1121: Obtain a third quantization bit set through variation based on a first quantization bit set

S1122: Randomly generate a fourth quantization bit set

S1123: Merge the third quantization bit set and the fourth quantization bit set

S1124: Quantize a first weight of each layer of a neural network model

S1125: Determine fitness of the neural network

S1126: Select k quantization bit sequences with highest fitness as a new first quantization bit set

Whether a threshold is reached

No

Yes

S1127: Select a quantization bit sequence with highest fitness as quantization bits of the neural network

FIG. 3

FIG. 4

FIG. 5

FIG. 6

| Computing device A | | | | Network | | Computing device B | | |
|---|---|---|---|---|---|---|---|---|

Processor
304

Communication
interface 308

Bus 302

Memory 306

Obtaining
module

Computing
device A

Network

Communication
interface 308

Processor
304

Bus 302

Memory 306

Quantization
module

Computing
device B

FIG. 7

## INTERNATIONAL SEARCH REPORT

| International application No. |
|---|
| **PCT/CN2023/114431** |

**A. CLASSIFICATION OF SUBJECT MATTER**

G06N 3/0495(2023.01)i;  G06N 3/086(2023.01)n

According to International Patent Classification (IPC) or to both national classification and IPC

**B. FIELDS SEARCHED**

Minimum documentation searched (classification system followed by classification symbols)

IPC: G06N

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 神经网络, 权重, 权值, 量化, 比特, 损失, 敏感度, 敏感程度, 灵敏度, 灵敏程度, 层, 混合精度, 拼接, 拼凑, 进化, 变异, 适应度, 优化, 学生模型, 教师模型, 老师模型, neural network, weight, quantization, bit, loss, sensitiveness, sensitivity, layer, merge, splice, evolution, mutation, fitness, optimize, student model, teacher model

**C. DOCUMENTS CONSIDERED TO BE RELEVANT**

| Category* | Citation of document, with indication, where appropriate, of the relevant passages | Relevant to claim No. |
|---|---|---|
| X | CN 113222148 A (ZHEJIANG UNIVERSITY) 06 August 2021 (2021-08-06) description, paragraphs 0059-0096 | 1-2, 8-13 |
| Y | CN 113222148 A (ZHEJIANG UNIVERSITY) 06 August 2021 (2021-08-06) description, paragraphs 0059-0096 | 3-7 |
| Y | CN 111898750 A (PEKING UNIVERSITY) 06 November 2020 (2020-11-06) description, paragraphs 0049-0080 | 3-7 |
| X | CN 110309904 A (GUANGZHOU HOMEBAY TECHNOLOGY CO., LTD.) 08 October 2019 (2019-10-08) description, paragraphs 0055-0120, and figures 2-4 | 1-2, 8-13 |
| A | CN 114861886 A (APOLLO INTELLIGENT TECHNOLOGY (BEIJING) CO., LTD.) 05 August 2022 (2022-08-05) entire document | 1-13 |

☑ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **08 November 2023** | **23 November 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/114431**

**C.     DOCUMENTS CONSIDERED TO BE RELEVANT**

| Category* | Citation of document, with indication, where appropriate, of the relevant passages | Relevant to claim No. |
|---|---|---|
| A | CN 113298224 A (SHANGHAI SHANGTANG INTELLIGENT TECHNOLOGY CO., LTD.) 24 August 2021 (2021-08-24) entire document | 1-13 |
| A | US 2014046885 A1 (QUALCOMM INC.) 13 February 2014 (2014-02-13) entire document | 1-13 |
| A | US 2016328647 A1 (QUALCOMM INC.) 10 November 2016 (2016-11-10) entire document | 1-13 |
| A | CN 114676832 A (ARM TECHNOLOGY (CHINA) CO., LTD.) 28 June 2022 (2022-06-28) entire document | 1-13 |

Form PCT/ISA/210 (second sheet) (July 2022)

**INTERNATIONAL SEARCH REPORT**
**Information on patent family members**

International application No.

**PCT/CN2023/114431**

| Patent document cited in search report | | | Publication date (day/month/year) | Patent family member(s) | | | Publication date (day/month/year) |
|---|---|---|---|---|---|---|---|
| CN | 113222148 | A | 06 August 2021 | None | | | |
| CN | 111898750 | A | 06 November 2020 | None | | | |
| CN | 110309904 | A | 08 October 2019 | None | | | |
| CN | 114861886 | A | 05 August 2022 | None | | | |
| CN | 113298224 | A | 24 August 2021 | None | | | |
| US | 2014046885 | A1 | 13 February 2014 | US | 9224089 | B2 | 29 December 2015 |
| | | | | TW | 201411509 | A | 16 March 2014 |
| | | | | WO | 2014025619 | A2 | 13 February 2014 |
| | | | | WO | 2014025619 | A3 | 03 April 2014 |
| US | 2016328647 | A1 | 10 November 2016 | EP | 3295382 | A1 | 21 March 2018 |
| | | | | EP | 3295382 | B1 | 10 March 2021 |
| | | | | WO | 2016182659 | A1 | 17 November 2016 |
| | | | | US | 10262259 | B2 | 16 April 2019 |
| | | | | EP | 3852016 | A1 | 21 July 2021 |
| | | | | IN | 201747033714 | A | 29 September 2017 |
| | | | | CN | 107646116 | A | 30 January 2018 |
| | | | | CN | 113487021 | A | 08 October 2021 |
| CN | 114676832 | A | 28 June 2022 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211051840